# EUROPEAN PATENT SPECIFICATION

(11) **EP 3 967 578 B1**
(45) Date of publication and mention of the grant of the patent: **19.02.2025**
(21) Application number: 21195919.2
(22) Date of filing: 10.09.2021
(51) Int. Cl.: B62D 17/00, B62D 7/18, B60B 35/00

(54) **WHEEL ASSEMBLY FOR A HEAVY VEHICLE COMPRISING AN ANGULAR ADJUSTING DEVICE**
RADBAUGRUPPE FÜR EIN SCHWERES FAHRZEUG MIT EINER WINKELEINSTELLVORRICHTUNG
ENSEMBLE DE ROUE POUR UN VÉHICULE LOURD COMPRENANT UN DISPOSITIF DE RÉGLAGE ANGULAIRE

(30) Priority: 10.09.2020 IT 202000021466
(43) Date of publication of application: 16.03.2022
(73) Proprietor: IVECO S.P.A., 10156 Torino (IT)
(72) Inventor: PEREIRA DE LEMOS, Josè Francivaldo, SETE LAGOAS MG (BR)
(74) Representative: Studio Torta S.p.A.

(56) References cited:
- CN-A- 104 709 351
- JP-U- S57 170 371
- US-A- 1 569 311
- US-A- 4 243 339
- US-A- 5 316 332

## Description

### TECHNICAL FIELD

The invention relates to a wheel assembly comprising an angular adjustment device, in particular an adjustment device for the adjustment of the camber angle of a wheel of a heavy vehicle, such as a truck or a bus.

### KNOWN STATE OF THE ART

Heavy vehicles, such as trucks or buses, are knowingly provided with wheels, which have a fixed camber angle relative to the ground.

The camber angle is the angle between the vertical and the middle plane of the wheel when viewed from the front. If the top of the wheel is farther out than the bottom, it is called positive camber, vice versa it is called negative camber.

A change in said angle affects the driving performance of the vehicle and, especially in case of a heavy vehicle, the wear of the tyres, thus changing their surface in contact with the ground.

Based on current environmental needs, there is a stronger and stronger need to provide vehicles with an improved driving performance and to reduce the wear of the elements making them up, such as tyres.

Known wheel assemblies are disclosed in published documents JPS57170371 U, US4243339 A, US5316332 A, US1569311 A or CN104709351 A. JPS57170371 U discloses the features of the preamble of claim 1.

The object of the invention is to fulfil the needs discussed above in an optimized and economic fashion.

### SUMMARY OF THE INVENTION

The aforesaid object is reached by a wheel assembly comprising a camber angle adjustment device and by a vehicle comprising said wheel assembly as claimed in the appended independent claims.

Further preferred embodiments of the invention are described in the dependent claims or in the claims connected to the aforesaid independent claims.

### BRIEF DESCRIPTION OF THE DRAWINGS

The invention will be best understood upon perusal of the following detailed description of a preferred embodiment, which is provided by way of non-limiting example, with reference to the accompanying drawings, wherein:
- figure 1 shows a cross-sectional front view showing a vehicle wheel assembly comprising an angular adjustment device according to the invention;
- figure 2 is cross-sectional front view concerning an operating condition of positive variation of the camber angle relative to the wheel assembly of figure 1;
- figure 3 is cross-sectional front view concerning an operating condition of negative variation of the camber angle relative to the wheel assembly of figure 1 ;
- figure 4 is an enlarged view of a portion of the angular adjustment device of figure 1;
- figure 5 is a cross-sectional view according to line V-V of figure 4;
- figure 6 is an enlarged view of a portion of the angular adjustment device of figure 2;
- figure 7 is a cross sectional view according to line VII-VII of figure 6;
- figure 8 is an enlarged view of a portion of the angular adjustment device of figure 3;
- figure 9 is a cross-sectional view according to line IX-IX of figure 8.

### DETAILED DESCRIPTION OF THE INVENTION

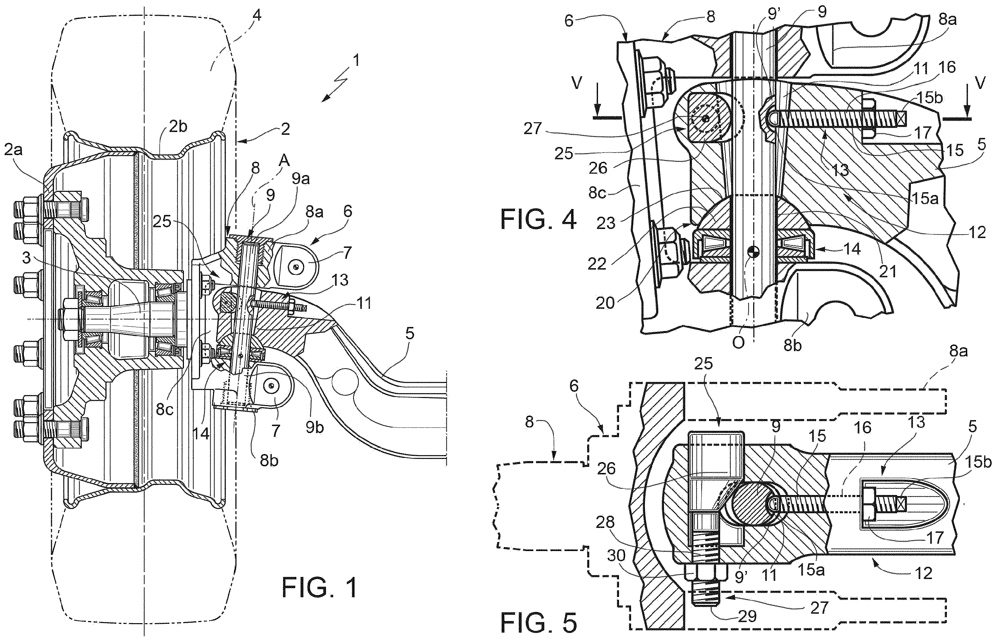

Figure 1 shows a known wheel assembly 1 comprising a wheel 2 for a heavy vehicle, which is not shown. In particular, the wheel 2 comprises a disc 2a, which is mounted so as to freely rotate on a hub 3, and a rim 2b, which is rigidly carried by the disc 2a and defines a support for a tyre 4.

In the case described herein, since it relates to a heavy vehicle, the hub 3 is carried by an axle 5 and is advantageously defined by a knuckle 6, which is connected to the axle 5 in a movable manner, as defined hereinafter.

The knuckle 6 can have any shape and is configured to define a plurality of anchoring points 7 for elements of the vehicle configured to control the steering of the wheel 2, namely its inclination relative to a longitudinal axis of the vehicle, as well as for elements of the suspension system of the vehicle configured to connect the knuckle 6 and/or the axle 5 to the frame of the vehicle.

In particular, the knuckle 6 comprises a main body 8 defining the aforesaid anchoring points 7 and specifically comprising an upper portion 8a, a lower portion 8n and an intermediate portion 8c, which connects the upper and lower portions 8a, 8b. Preferably, the upper portion 8a and the lower portion 8b of the main body 8 are arranged on opposite end sides of the intermediate portion 8c and project from it, in particular on the opposite side relative to the hub 3. According to the embodiment shown herein, the anchoring portions 7 are defined by the upper and lower portions 8a, 8b and, according to figure 5, the upper and lower portions 8a, 8b preferably have a substantially "C"-shaped cross section. Advantageously, the main body 8 is manufactured as one single piece.

The knuckle 6 is connected to the axle 5 through a pin 9 comprising an upper end portion 9a, which is fixed to the upper portion 8a, and a lower end portion 9b, which is fixed to the lower portion 8b.

The pin 9 advantageously has a prismatic shape, which is substantially cylindrical and constant between the upper and lower portions 9a, 9b, and extends along an axis A. Said pin 9 is housed inside a respective seat 11, which is obtained in the axle 5 and is sized so as to allow the pin 9 to rotate around the axis A.

Based on the configuration described above, the axis A is the steering axis of the wheel 2 and the steering can the operated by the aforesaid elements, which act by applying a force in the anchoring portions 7.

According to the invention, the wheel assembly 1 comprises an adjustment device, which is configured to change the inclination of the axis of the pin 9 relative to the vertical. Preferably, this variation relative to the vertical can be a variation in a transverse plane of the vehicle (camber angle).

The adjustment device 12 basically comprises:
- a thrust element 13, which is configured to change the position either of the upper portion 9a or of the lower portion 9b of the pin 9;
- a support element 14 with different degrees of freedom to support the other one of either the upper portion 9a or the lower portion 9b of the pin 9, in particular to allow for a change in the inclination of the axis A relative to the vertical and to allow the pin 9 to rotate relative to said axle 5.

Advantageously, the thrust element 13 comprises a threaded element 15, which is housed in a respective seat 16 obtained on the axle 5 and comprises a contact portion 15a, which is configured to cooperate in contact with the pin 9, and an adjustment portion 15b on the opposite side relative to the contact portion 15a with respect to the seat 16.

The threaded element 15 is configured to cooperate with a respective thread obtained in the seat 16 so that a rotation thereof turns into an extension or retraction along its longitudinal axis. Preferably, the threaded element 15 is a screw and the adjustment portion 15b comprises a nut 17, which is configured to facilitate the movement of the screw along the aforesaid longitudinal axis.

The contact portion 15a, as mentioned above, cooperates in contact with the pin 9 and, preferably, in a seat 9' obtained in the latter and configured to have a shape corresponding to the one of the contact portion 15a.

The support element 14 with different degrees of freedom advantageously comprises a ball joint 20. Advantageously, the ball joint 20 is carried in a rotary manner, for example by means of rolling means 19, by the lower portion 8b of the main body 8 of the knuckle 6 and defines a through opening 21, which is configured to house the pin 9.

Advantageously, the ball joint 20 comprises a spherical portion 22, which has a centre O, which is part of the rotation axis A o the pint 9. The spherical portion 22 defines an outer contact surface, which is configured to cooperate with a respective seat 23 with a complementary shape obtained on the axle 5. Advantageously, said seat 23 communicates with the seat 11 housing the pin 9.

According to the description above, the seat 11 has a flared shape, which, in particular, tends to widen crosswise to the axis A from the lower portion 9b to the upper portion 9.

The opening of the seat ranges from plus to minus 3° relative to the neutral portion of the axis A corresponding to the neutral position (namely, with 0° camber angle) of the wheel 2.

As a consequence, the pin 9 can move by plus or minus 3° relative to the axis A.

Advantageously, the adjustment device 12 can comprise a second thrust element 25, which is configured to cooperate in contact with the pin 9 on the opposite side relative to the first thrust element 13.

Preferably, the second thrust element 25 comprises a cam 26, which is configured to define a contact surface for the pin 9. The position of the cam 26 can be adjusted depending on the movement of the first thrust element 13.

In particular, the position of the cam 26 is adjusted by means of threaded means 27, which are advantageously manufactured as one single piece together with the cam 26 and are configured to be engaged in a hole 28 made on the axle 5. Similarly to the first thrust element 13, the threaded means 27 comprise a screw 29 configured to engage the hole 28 and a nut 30 to allow it to move along its longitudinal axis.

As figure 5 clearly reveals, the longitudinal movement axes of the first and of the second thrust element 13, 25 are incident and coplanar to one another and, more advantageously, perpendicular.

The embodiment of the wheel assembly 1 comprising an adjustment device 12 according to the invention, as described above, works as follows.

Figures 1, 4 and 5 show condition in which the position of the axis A of pin 9 is inclined relative to the vertical so as to obtain a neutral camber angle condition.

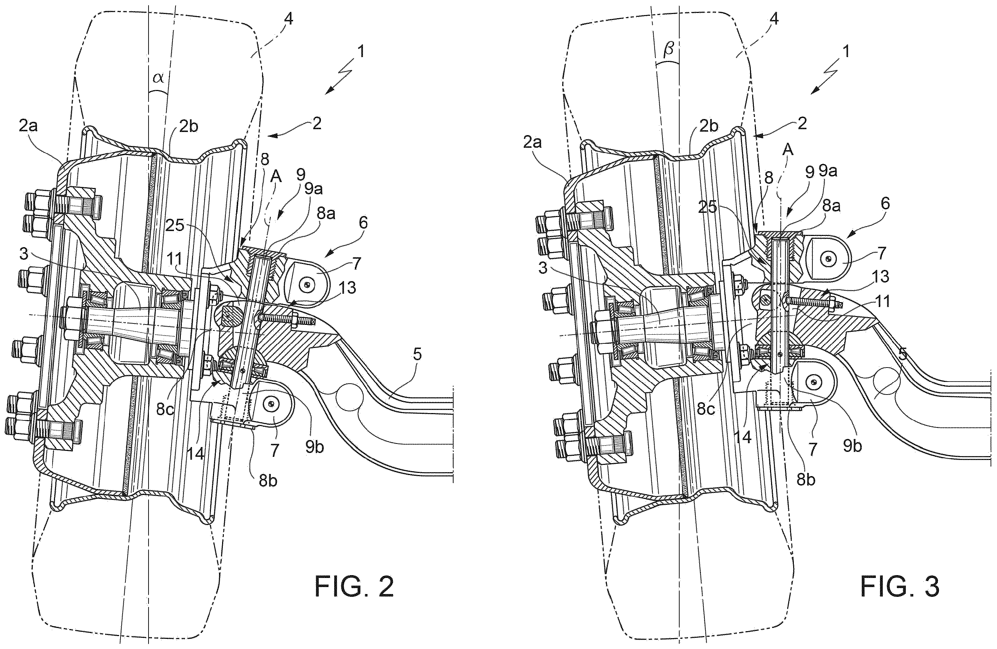

Figures 2, 6 and 7 show a condition of extreme position of the axis A of the pin 9, in which a negative camber angle α relative to the condition of figure 1 is maximized.

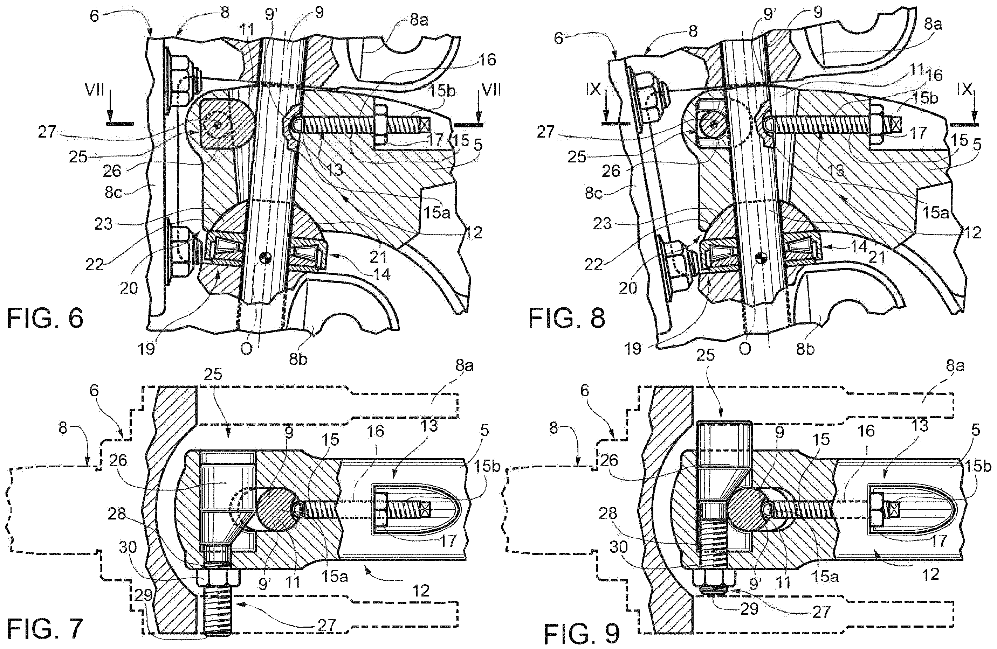

In order to reach the condition of figure 2, according to figures 6 and 7, the nut 17 simply needs to be rotated so that the screw 15 tends to move removing itself from the respective seat 16. At the same time, by rotating the nut 30, the cam 26 can be moved so that its profile remains in contact with the pin 9, hence laterally supporting the latter.

The movement of the pin 9 is followed by the ball joint 20, whose spherical portion 22 cooperates in contact with the relative seat 23. Once the angle α is set, thanks to the rolling means 19, the ball joint 20 can rotate around the axis A, thus allowing for the steering of the wheel assembly 1.

Figures 3, 8 and 9 show a condition of extreme position of the axis A of the pin 9, in which a positive camber angle β relative to the condition of figure 1 is maximized.

In order to reach the condition of figure 3, according to figures 8 and 9, the nut 17 simply needs to be rotated so that the screw 15 tends to move inserting itself into the respective seat 16. At the same time, by rotating the nut 30, the cam 26 can be moved so that its profile allows the pin 9 to move, at the same time laterally supporting the latter.

Also in this case, the movement of the pin 9 is followed by the ball joint 20, whose spherical portion 22 cooperates in contact with the relative seat 23. Once the angle β is set, thanks to the rolling means 19, the ball joint 20 can rotate around the axis A, thus allowing for the steering of the wheel assembly 1.

In case users need to set an intermediate camber angle between the two extreme conditions described above, a combined adjustment of the thrust elements 13 and 25 needs to be performed.

By providing sensor means to detect the camber angle of the wheel 2 and actuator means to move the thrust elements 13 and 25, this operation can be automated, also providing an electronic unit configured to detect the camber angle of the wheel 2 and to control the actuator means accordingly, for example in a closed loop, until the desired camber angle is obtained.

Owing to the above, the advantages of a wheel assembly according to the invention are evident.

Thanks to the adjustment device 12 according to the invention, the angle of inclination of the knuckle 6 can be adjusted also in heavy vehicles.

Hence, the camber angle can be adjusted, thus significantly reducing the wear of the tyres and, hence, increasing the useful life thereof and reducing the consumptions of the vehicle.

The use of threaded means as thrust elements 13, 25 allows for a precise adjustment of the pin 9 of the knuckle and, at the same time, for an effective connection to the axle. Furthermore, the system is very compact and can potentially be used in any vehicle, though basically not affecting the technical specifications of the other functional elements of the vehicle, such as the suspensions or the steering system. Finally, the wheel assembly according to the invention can be subjected to changes and variants, which, though, do not go beyond the scope of protection set forth in the appended claims.

For example, the thrust elements 13, 25 described above could clearly be moved in a different manner. Furthermore, the shape of the knuckle 6 or of the axle 5 can evidently change and there can be further elements (suspensions, steering wheel) other than the ones described and shown herein by way of example.

In addition, the cam 27 could have a different shape and be used to change the caster angle, thus properly changing the positioning of the flaring of the seat 11.

## Claims

1. Wheel assembly (1) for a heavy vehicle comprising a wheel (2) and a hub (3) defined by a knuckle (6) configured to be carried by an axle (5) of said vehicle, said wheel (2)) being carried in a rotationally free way on said hub (3) and defining an angle (α, β) between an axis of incidence on the ground of said wheel with respect to a center line of the same,
said knuckle (6) being connected to said axle (5) by means of a pin (9) rigidly connecting two portions (8a, 8b) of said knuckle (6), said pin (9) extending along a longitudinal axis (A) and being rotationally free housed in a hole (11) passing through said axle (5),
said wheel assembly (1) including an adjustment device (12) to vary the inclination of said axis (A) of said pin (9) so as to vary said angle (α, β), **characterized in that** said adjustment device (12) comprises:
• a first thrust element (13) configured to vary the position of one of an upper or lower portion (9a, 9b) of said pin (9); and
• a support element (14) with multiple degrees of freedom to support the other between said upper or lower portion (9a, 9b).

2. A wheel assembly according to claim 1, wherein said support element (14) is configured to allow the variation of inclination of said axis (A) with respect to the vertical of said pin (9) and to allow rotation of said pin (9) with respect to said axle (5) about said axis (A).

3. Assembly according to claim 1 or 2, wherein said support element (14) comprises a ball joint (20) cooperating with a seat (23) obtained in said axle (5), said ball joint (20) defining a through opening (21) for housing said pin (9), said support element (14) also comprising rolling means (19) configured to support said ball joint (20) to allow its rotation around said axis (A) of said pin (9).

4. Assembly according to one of the preceding claims, wherein said first thrust element (13) comprises a threaded element (15) housed in a respective seat (16) formed on said axle (5) and comprising a portion of contact (15a) configured to cooperate in contact with said pin (9) and an adjustment portion (15b) on the opposite side with respect to said contact portion (15a) said adjustment portion (15) being provided with a nut (17) configured to be rotated to vary the longitudinal position of said threaded element (15) in said seat (16).

5. Assembly according to claim 4, wherein said pin (9) defines a seat (9') cooperating with said contact portion (15a).

6. Assembly according to one of the preceding claims, wherein said adjustment device (12) comprises a second thrust element (25) configured to cooperate in contact with the pin (9) on the opposite side with respect to said first thrust element.

7. An assembly according to claim 6, wherein said second thrust element (25) comprises a cam (26) defining a contact surface with said pin (9).

8. Assembly according to claim 7, wherein said cam (26) has an adjustable position by means of threaded means (27) configured to cooperate with a seat (28) made in said axle (5) and a nut (30) configured to be rotated to vary the longitudinal position of said threaded means (27) with respect to said seat (28).

9. An assembly according to claim 8, in which the longitudinal axes of said threaded element (15) and said threaded means (27) are coplanar and incident with each other.

10. An assembly according to claim 8 or 9, in which the longitudinal axes of said threaded element (15) and said threaded means (27) are mutually perpendicular.

11. Assembly according to any one of the preceding claims, comprising sensor means for detecting said angle (α, β), actuator means for actuating said thrust element (13; 25) and an electronic unit configured to control said actuator means according to the value detected by said sensor means.

12. Assembly according to any one of the preceding claims, in which said angle (α, β) can vary by plus or minus 3 ° with respect to the vertical.

13. Heavy vehicle comprising a wheel assembly (1) according to any one of the preceding claims.

## Patentansprüche

1. Radbaugruppe (1) für ein Schwerfahrzeug, umfassend ein Rad (2) und eine Nabe (3), definiert durch einen Achsschenkel (6), der so konfiguriert ist, dass er von einer Achse (5) des Fahrzeugs aufgenommen ist, wobei das Rad (2) drehbar an der Nabe (3) befestigt ist und einen Winkel (α, β) zwischen einer Inzidenzachse des Rades auf dem Boden in Bezug auf eine Mittellinie des Rades bildet,
wobei der Achsschenkel (6) mittels eines Bolzens (9), der zwei Teile (8a, 8b) des Achsschenkels (6) starr miteinander verbindet, mit der Achse (5) verbunden ist, wobei der Bolzen (9) entlang einer Längsachse (A) verläuft und drehbar in einem Loch (11), das durch die Achse (5) führt, untergebracht ist,
wobei die Radbaugruppe (1) eine Einstellvorrichtung (12) umfasst, um die Neigung der Achse (A) des Bolzens (9) zu variieren, um den Winkel (α, β) zu ändern,
**dadurch gekennzeichnet, dass** die Einstellvorrichtung (12) folgendes umfasst:
- ein erstes Druckelement (13), das konfiguriert ist, um die Position eines oberen oder unteren Teils (9a, 9b) des Bolzens (9) zu variieren; und
- ein Tragelement (14) mit mehreren Freiheitsgraden, um den jeweils anderen Teil zwischen dem oberen oder unteren Teil (9a, 9b) zu stützen.

2. Radbaugruppe nach Anspruch 1, wobei das Tragelement (14) so konfiguriert ist, dass es die Neigungsänderung der Achse (A) in Bezug auf die Vertikale des Bolzens (9) ermöglicht und die Rotation des Bolzens (9) in Bezug auf die Achse (5) um die Achse (A) erlaubt.

3. Baugruppe nach Anspruch 1 oder 2, wobei das Tragelement (14) ein Kugelgelenk (20) umfasst, das mit einem in der Achse (5) gebildeten Sitz (23) zusammenwirkt, wobei das Kugelgelenk (20) eine Durchgangsöffnung (21) zur Aufnahme des Bolzens (9) definiert, wobei das Tragelement (14) auch Wälzelemente (19) umfasst, die konfiguriert sind, das Kugelgelenk (20) zu tragen und dessen Rotation um die Achse (A) des Bolzens (9) zu ermöglichen.

4. Baugruppe nach einem der vorhergehenden Ansprüche, wobei das erste Druckelement (13) ein Gewindeelement (15) umfasst, das in einem entsprechenden Sitz (16), der an der Achse (5) ausgebildet ist, untergebracht ist und einen Kontaktbereich (15a) umfasst, der so konfiguriert ist, dass er in Kontakt mit dem Bolzen (9) zusammenwirkt, und einen Einstellbereich (15b) auf der gegenüberliegenden Seite des Kontaktbereichs (15a), wobei der Einstellbereich (15b) mit einer Mutter (17) versehen ist, die so konfiguriert ist, dass sie gedreht werden kann, um die Längsposition des Gewindeelements (15) im Sitz (16) zu variieren.

5. Baugruppe nach Anspruch 4, wobei der Bolzen (9) einen Sitz (9') definiert, der mit dem Kontaktbereich (15a) zusammenwirkt.

6. Baugruppe nach einem der vorhergehenden Ansprüche, wobei die Einstellvorrichtung (12) ein zweites Druckelement (25) umfasst, das konfiguriert ist, um mit dem Bolzen (9) auf der gegenüberliegenden Seite des ersten Druckelements zusammenzuwirken.

7. Baugruppe nach Anspruch 6, wobei das zweite Druckelement (25) einen Nocken (26) umfasst, der eine Kontaktfläche mit dem Bolzen (9) definiert.

8. Baugruppe nach Anspruch 7, wobei der Nocken (26) eine Einstellposition mittels Gewindemitteln (27), die so konfiguriert sind, dass sie mit einem Sitz (28), der in der Achse (5) ausgebildet ist, zusammenwirken, und einer Mutter (30), die so konfiguriert ist, dass sie gedreht werden kann, um die Längsposition der Gewindemittel (27) im Sitz (28) zu variieren, hat.

9. Baugruppe nach Anspruch 8, bei der die Längsachsen des Gewindeelements (15) und der Gewindeelemente (27) koplanar und aufeinanderstoßend sind.

10. Baugruppe nach Anspruch 8 oder 9, bei der die Längsachsen des Gewindeelements (15) und der Gewindemittel (27) zueinander senkrecht stehen.

11. Baugruppe nach einem der vorhergehenden Ansprüche, umfassend Sensormittel zur Erfassung des Winkels (α, β), Aktormittel zur Betätigung des Druckelements (13; 25) und eine elektronische Einheit, die so konfiguriert ist, dass sie die Aktormittel basierend auf dem von den Sensormitteln erfassten Wert steuert.

12. Baugruppe nach einem der vorhergehenden Ansprüche, bei der der Winkel (α, β) um plus oder minus 3° in Bezug auf die Vertikale variierbar ist.

13. Schwerfahrzeug, umfassend eine Radbaugruppe (1) nach einem der vorhergehenden Ansprüche.

## Revendications

1. Ensemble de roue (1) pour un véhicule lourd comprenant une roue (2) et un moyeu (3) défini par une fourche (6) configurée pour être portée par un essieu (5) dudit véhicule, ladite roue (2) étant portée de manière librement rotative sur ledit moyeu (3) et définissant un angle (α, β) entre un axe d'incidence sur le sol de ladite roue par rapport à une ligne centrale de cette dernière,
ladite fourche (6) étant raccordée audit essieu (5) au moyen d'une broche (9) raccordant, rigidement, deux parties (8a, 8b) de ladite fourche (6), ladite broche (9) s'étendant le long d'un axe longitudinal (A) et étant logée en rotation libre dans un trou (11) passant à travers ledit essieu (5),
ledit ensemble de roue (1) comprenant un dispositif de réglage (12) afin de modifier l'inclinaison dudit axe (A) de ladite broche (9) pour modifier ledit angle (α, β),
**caractérisé en ce que** ledit dispositif de réglage (12) comprend :
un premier élément de poussée (13) configuré pour modifier la position de l'une parmi une partie supérieure ou inférieure (9a, 9b) de ladite broche (9) ; et
un élément de support (14) avec plusieurs degrés de liberté pour supporter l'autre entre ladite partie supérieure ou inférieure (9a, 9b).

2. Ensemble de roue selon la revendication 1, dans lequel ledit élément de support (14) est configuré pour permettre la variation d'inclinaison dudit axe (A) par rapport à la verticale de ladite broche (9) et pour permettre la rotation de ladite broche (9) par rapport audit essieu (5) autour dudit axe (A).

3. Ensemble selon la revendication 1 ou 2, dans lequel ledit élément de support (14) comprend un joint à rotule (20) coopérant avec un siège (23) obtenu dans ledit essieu (5), ledit joint à rotule (20) définissant une ouverture débouchante (21) pour loger ladite broche (9), ledit élément de support (14) comprenant également des moyens de roulement (19) configurés pour supporter ledit joint à rotule (20) afin de permettre sa rotation autour dudit axe (A) de ladite broche (9).

4. Ensemble selon l'une des revendications précédentes, dans lequel ledit premier élément de poussée (13) comprend un élément fileté (15) logé dans un siège (16) respectif formé sur ledit essieu (5) et comprenant une partie de contact (15a) configurée pour coopérer en contact avec ladite broche (9) et une partie de réglage (15b) sur le côté opposé par rapport à ladite partie de contact (15a), ladite partie de réglage (15) étant prévue avec un écrou (17) configuré pour être entraîné en rotation afin de modifier la position longitudinale dudit élément fileté (15) dans ledit siège (16).

5. Ensemble selon la revendication 4, dans lequel ladite broche (9) définit un siège (9') coopérant avec ladite partie de contact (15a).

6. Ensemble selon l'une des revendications précédentes, dans lequel ledit dispositif de réglage (12) comprend un second élément de poussée (25) configuré pour coopérer en contact avec la broche (9) sur le côté opposé par rapport audit premier élément de poussée.

7. Ensemble selon la revendication 6, dans lequel ledit second élément de poussée (25) comprend une came (26) définissant une surface de contact avec ladite broche (9).

8. Ensemble selon la revendication 7, dans lequel ladite came (26) a une position réglable au moyen de moyens filetés (27) configurés pour coopérer avec un siège (28) réalisé dans ledit essieu (5) et un écrou (30) configuré pour être entraîné en rotation afin de modifier la position longitudinale desdits moyens filetés (27) par rapport audit siège (28).

9. Ensemble selon la revendication 8, dans lequel les axes longitudinaux dudit élément fileté (15) et desdits moyens filetés (27) sont coplanaires et incidents entre eux.

10. Ensemble selon la revendication 8 ou 9, dans lequel les axes longitudinaux dudit élément fileté (15) et desdits moyens filetés (27) sont mutuellement perpendiculaires.

11. Ensemble selon l'une quelconque des revendications précédentes, comprenant des moyens de capteur pour détecter ledit angle (α, β), des moyens d'actionneur pour actionner ledit élément de poussée (13 ; 25) et une unité électronique configurée pour commander lesdits moyens d'actionneur selon la valeur détectée par lesdits moyens de capteur.

12. Ensemble selon l'une quelconque des revendications précédentes, dans lequel ledit angle (α, β) peut varier selon plus ou moins 3° par rapport à la verticale.

13. Véhicule lourd comprenant un ensemble de roue (1) selon l'une quelconque des revendications précédentes.
